# EUROPÄISCHE PATENTANMELDUNG

(11) **EP 2 450 575 A1**
(43) Veröffentlichungstag der Anmeldung: **09.05.2012**
(21) Anmeldenummer: 10190166.8
(22) Anmeldetag: 05.11.2010
(51) Int. Cl.: F04D 13/06, F04D 15/00, H02K 5/128, H02K 29/08, H02K 11/00

(54) **Elektromotorische Kfz-Flüssigkeits-Förderpumpe**

(71) Anmelder: Pierburg Pump Technology GmbH, 41460 Neuss (DE)
(72) Erfinder: Joschko, Witold, 47906, KEMPEN (DE); Gibat, Thomas Joachim, 47839, KREFELD (DE)
(74) Vertreter: Patentanwälte ter Smitten Eberlein Rütten Partnerschaftsgesellschaft

(57) **Zusammenfassung**

Elektromotorische Kfz-Flüssigkeits-Förderpumpen (10) mit einem elektrisch kommutierten Motorstator (12) und einem permanent erregten Motorrotor (14), wobei ein Spalttopf (16) den Nassbereich (22) mit dem Motorrotor (14) und einem Pumpenrotor (20) von dem den Motorstator (12) aufweisenden Trockenbereich (24) trennt, mit einem ferromagnetischen Flussleitelement (30) und mit einem Hallsensors (32), der statorseitig beabstandet zum Motorrotor (14) angeordnet ist, sind bekannt.

Die Halterung und Montage eines derartigen Flussieltelementes (30) ist allerdings aufwendig in der Fertigung und erfordert mehr Bauraum.

Erfindungsgemäß wird daher vorgeschlagen, dass das ferromagnetische Flussleitelement (30) in einer Ausnehmung (34) des Spalttopfes (16) angeordnet ist, so dass separate Bauteile zum Halten und/oder Montieren des Flussleitelementes (30) entfallen und außerdem die axiale Dicke des Spalttopfes (16), der eine geringe magnetische Leitfähigkeit aufweist, teilweise überbrückt wird, wodurch eine Erhöhung der Flussdichte zur verbesserten Rotorlageerkennung realisiert wird.

## Beschreibung

Die Erfindung betrifft eine elektromotorische Kfz-Flüssigkeits-Förderpumpe mit Spalttopf.

Eine elektromotorische Förderpumpe mit Spalttopf weist einen elektronisch kommutierten Motorstator und einem permanent erregten Motorrotor auf, wobei der Spalttopf den Nassbereich mit dem Motorrotor und einem Pumpenrotor von dem den Motorstator aufweisenden Trockenbereich trennt. Derartige Förderpumpen werden beispielsweise als Kühlmittelpumpen eingesetzt. Um eine Rotorlage-Information für die elektronische Kommutierung zu erhalten, ist ein Hallsensor und ein ferromagnetisches Flussleitelement statorseitig und beabstandet zum Motorrotor angeordnet.

Zur Erkennung der Rotorlage und/oder der Rotordrehzahl werden magnetfeldempfindliche Sensorelemente, insbesondere Hallsensoren eingesetzt. Bei derartigen Anordnungen ist eine zuverlässige Auswertung des entsprechenden Magnetfeldes oft schwierig, da, je nach räumlicher Anordnung des Hallsensors, das magnetische Feld an der Stelle des Hallsensors sehr schwach sein kann, Desweiteren kann die Rotoriageerkennung durch Streufelder verfälscht werden, die zum Beispiel durch Ströme in den Statorwicklungen verursacht werden.

Derartige Probleme sind beispielsweise in der DE 10 2005 004 322 A1 beschrieben, die eine elektrische Maschine mit einer Sensorvorrichtung offenbart. Um eine bessere Rotorlageerkennung zu gewährleisten, weist die Anordnung ein ferromagnetisches Flussleitelement auf, das einen Rückschluss zur gezielten Führung des magnetischen Flusses zwischen zwei gegensinnigen Polen des Gebermagneten bildet. Nachteilig ist bei dieser Lösung, dass der Gebermagnet einen axialen Überstand gegenüber dem Stator aufweisen muss, damit das Flussleitelement entlang des Gebermagneten angeordnet werden kann, wodurch erhöhte Materialkosten zur Herstellung des Magneten verursacht werden. Desweiteren ist eine derartige Anordnung aufwendig in der Fertigung und erfordert mehr Bauraum.

Es ist daher Aufgabe der Erfindung, eine elektromotorische Förderpumpe zur Verfügung zu stellen, mit der eine kostengünstige und einfache zu fertigende Anordnung zur Lageerkennung des Rotors realisiert werden kann.

Diese Aufgabe wird gelöst durch eine elektromotorische Förderpumpe mit den Merkmalen des Anspruchs 1,

Die erfindungsgemäße elektromotorische Kfz-Flüssigkeits-Förderpumpe weist in einer Ausnehmung des Spalttopfes ein ferromagnetisches Flussleitelement auf, wobei das Magnetfeld des Motorrotors über das Flussleitelement zu dem Hallsensors geleitet wird und zu einer höheren Konzentration der Flussdichte an der Position des Hallsensors führt. Auf diese Weise können auch Pumpenanordnungen realisiert werden, bei denen die Leiterplatte, auf der der Hallsensors angeordnet ist, aus thermischen oder bauraumbedingten Gründen mit einem gewissen Abstand zum Motor positioniert ist. Desweiteren entfallen separate Bauteile zum Halten und/oder Montieren des Flussleitelementes, da dieses bereits in einer Ausnehmung im Spalttopf mindestens teilweise integriert ist. Hierdurch wird außerdem die axiale Dicke des Spalttopfes, der eine geringe magnetische Leitfähigkeit aufweist, teilweise überbrückt, wodurch eine Erhöhung der Flussdichte erreicht wird.

Vorzugsweise ist der Hallsensors axial, d.h. auf einer einzigen Axialen liegend, zum Motorrotor angeordnet, so dass zur zuverlässige Lagerückmeldung die zu detektierenden Feldlinien des Magnetfelds des Motorrotors gebündelt über das Flussleitelement zu dem Hallsensor geleitet werden. Hierdurch wird die Einwirkung von Störfeldern, beispielsweise Streufeldern, die durch Statorspulenströme verursacht werden, auf das zu detektierende Magnetfeld reduziert.

In einer vorteilhaften Ausführungsform ist der Hallsensor ein SMD-Bauteii, das in einer Querebene liegend vorgesehen ist, und wodurch eine einfache maschinelle Bestückung von Platinen bei geringerem Platzbedarf gewährleistet wird. Die Gewichtsreduzierung und der Wegfall der Anschlussdrähte lassen außerdem ein deutlich dünneres Leiterplattenmaterial zu.

Desweiteren ist in einer besonders bevorzugten Ausführungsform vorgesehen, dass auf einer Platine, die in einer Querebene angeordnet ist, sowohl eine Steuereinheit, die beispielsweise eine Kommutierungselektronik aufweist, als auch der Hallsensor angeordnet sind. Da es sich bei der Steuereinheit und der Kommutierungselektronik generell um wärmeempfindliche leistungselektronische Bauteile handelt, müssen diese mit einem erhöhten Abstand zum Motor angeordnet werden, da der Motor während des Betriebs Eigenwärme entwickelt und an die wärmeempfindlichen Bauteile abstrahlen würde. Durch die erfindungsgemäße Anordnung ist es möglich, den Hallsensor ebenfalls entfernt vom Rotor anzuordnen, so dass für die Steuereinheit und den Hallsensors nur eine einzige Platine benötigt wird. Hierdurch kann eine einfache Herstellung realisiert werden.

In einer weiteren vorteilhaften Ausführungsform ist die Platine einseitig bestückt. Im Gegensatz zur zweiseitigen Bestückung benötigt die einseitige Bestückung kein zusätzliches Kleben der Elemente auf der zweiten Seite der Platine, so dass sich ein einfaches und automatisierbarer Fertigungsprozess ergibt.

Die Platine ist dabei vorzugsweise auf ihrer motorabgewandten Seite bestückt, so dass auf diese Weise eine Abschattung der Leistungselektronikbauteile und des Hallsensors gegen die im Betrieb entstehende Eigenerwärmung des Motors gewährleistet wird.

In einer vorteilhaften Ausführungsform weist die Platine im Bereich des Hallsensors eine Öffnung auf, in die das Flussleitelement teilweise hineinragt. Hierdurch wird der Luftspalt zwischen dem Hallsensor und dem Fiussieiteiement zerkleinert, wodurch die magnetischen Verluste verringert werden.

Besonders vorteilhaft ist es ferner, dass sich das Flussleitelement distal zum Hallsensors hin verjüngt, wodurch es zu einer höheren Flussdichte des zu detektierenden Magnetfeldes zur Rotorlageerkennung in der Nähe des Hallsensors kommt.

Bei einer besonders bevorzugten Variante verjüngt sich das Flussleitelement distal konisch, wodurch eine gleichmäßig verteilte Konzentration des magnetischen Flusses am Ort des Hallsensors realisiert wird.

Vorzugsweise kann das Flussleitelement mindestens teilweise und unverlierbar im Spalttopf integriert sein, so dass ein Teil des Flussleitelementes im Spalttopf aufgenommen ist und der andere Teil des Flussleitelementes gegebenenfalls aus dem Spalttopf herausragt. Das Flussleitelement weist eine Hinterschneidung auf und kann bei der Herstellung des Spalttopfes direkt mit eingespritzt werden, wodurch keine weiteren Haltevorrichtungen zum Halten oder weitere Montageschritte zur Montage des Flussleitelementes notwendig sind.

In einer vorteilhaften Ausführungsform der Erfindung sind keine Rückfluss-Leitelemente vorgesehen, da durch das im Spalttopf angeordnete Flussleitelement die axiale Dicke des Spalttopfes, der aus einem Material geringerer magnetischer Leitfähigkeit besteht, überbrückt bzw. durch das Flussleitelement aus einem ferromagnetischen Material derart genutzt wird, dass eine so hohe Flussdichte an der Position des Hallsensors realisiert wird, dass auch ohne Rückfluss-Leitelemente eine günstige und zuverlässige Anordnung zur Rotorlageerkennung durch einen Hallsensors realisiert werden kann.

Vorzugsweise ist die Förderpumpe eine Kühlmittelpumpe, da sich die erfindungsgemäße Förderpumpe insbesondere durch ihre kompakte und kostengünstige Bauweise für den Einsatz im bauraumbegrenzten Motorinnenraum zur Regelung des Kühlkreislaufes eignet.

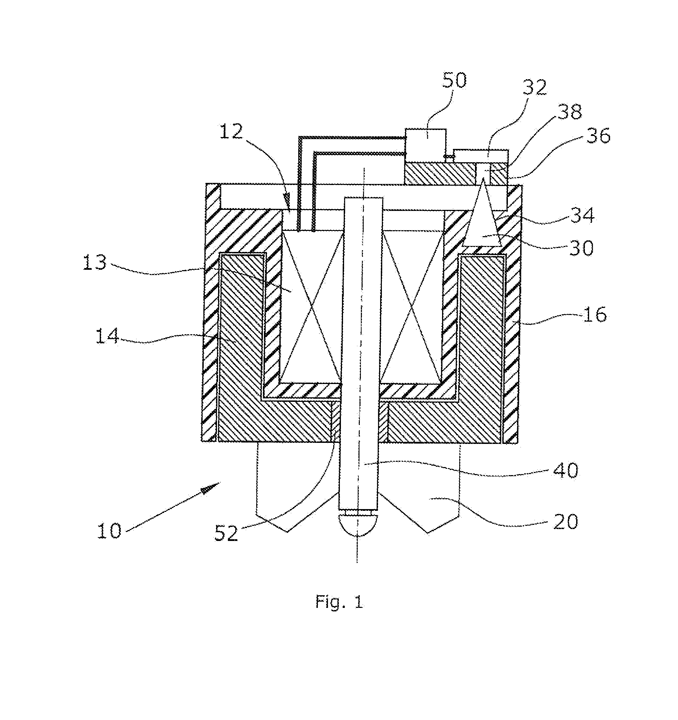

Die Erfindung wird anhand eines Längsquerschnitts einer erfindungsgemäßen Förderpumpe in Figur 1 näher beschrieben.

Figur 1 zeigt eine erfindungsgemäße Kfz-Flüssigkeitsförderpumpe 10 mit einem elektronisch kommutierten Motorstator 12 und einem permanent erregten Motorrotor 14. Zur vereinfachten Darstellung ist das Förderpumpengehäuse in Figur 1 nicht dargestellt. Der Motorrotor 14 ist topfförmig ausgebildet und mit einem Gleitlager 52 drehbar auf einer feststehenden Achse 40 gelagert, und nimmt den Motorstator 12 in seinem innenliegenden Motorrotorraum auf. Zwischen dem Motorrotor 14 und dem Motorstator 12 ist ein nicht-ferromagnetischer Spalttopf 16 derart angeordnet, dass der Pumpenraum in einen rotorseitigen Nassbereich und einen statorseitigen Trockenbereich getrennt ist. Im vorliegenden Beispiel läuft der Motorrotor 14 als Nassläufer und ist einstückig mit einem Pumpenrotor 20 ausgebildet.

Zur Erzeugung eines Drehfeldes werden die Statorwicklungen 13 des Motorstators 12 über eine Steuereinheit 50 angesteuert. Der genaue Zeitpunkt zur Bestromung der Statorwicklungen 13 hängt dabei insbesondere von der Rotorlage bzw. der Rotordrehzahl des Motorrotors 14 ab. Die Lageerkennung des Motorrotors 14 erfolgt mittels eines Hallsensors 32, der statorseitig und axial beabstandet zum permanent erregten Motorrotor 14 auf einer Platine 36 angeordnet ist. Die Platine 36 liegt in einer Querebene und weist auf ihrer motorabgewandten Seite eine Steuereinheit 50 und weitere Leistungselektronikbauteile auf. Der Hallsensor 32 ist als SMD-Bauteil ausgeführt und wird mittels lötfahigen Anschlussstellen direkt auf der Platine 36 montiert. Zwischen dem Hallsensor 32 und der Steuereinheit 50 ist eine Signalleitung vorgesehen, so dass das Sensorsignal des Hallsensors 32 als Eingangssignal in die Steuereinheit 50 übertragen, ausgewertet und zur Bestimmung des idealen Kommutierungszeitpunktes genutzt wird.

Die Platine 38 weist außerdem an der Stelle, an der der Hallsensor 32 angeordnet ist, eine axial durchgängige Öffnung 36 auf, wobei ein oberer Teil eines Flussleitelementes 30 teilweise in die Öffnung 36 hineinragt. Der untere Teil des Flussleitelementes 30 ist in einer Ausnehmung 34 im Spalttopf 16 unverlierbar integriert und wird beispielsweise bereits bei der Herstellung des Spalttopfes 16 mit eingegossen. Der obere Teil des Flussleitelementes 30 ragt aus dem Spalttopf 16 in die Öffnung 36 hinein, so dass der Luftspalt zwischen dem Flussleitelement 30 und dem Hallsensor 32 verkleinert wird, so dass eine höhere Flussdichte an der Position des Hallsensors 32 zur Rotorlageerkennung vorliegt.

Durch die Integration des Flussleitelementes 30 in die durchgängige Ausnehmung 34 ist eine hermetische Trennung zwischen dem rotorseitigen Nassbereich und dem statorseitigen Trockenbereich gewährleistet. Durch das Flussieltelement werden die zu detektierenden Feldlinien des Magnetfeldes des Motorrotors 14 gebündelt über das Flussleitelement 30 zu dem Hallsensors 32 geleitet, wodurch dort eine höhe Flussdichte erreicht wird. Das Flussleitelement 30 besteht aus einem ferromagnetischen Material. Das im nicht-ferromagnetischen Spalttopf unverlierbar und teilweise integrierte Flussleitelement 30 weist außerdem eine konisch verjüngte Geometrie auf, die sich zusätzlich verteilhaft auf die Konzentration des magnetischen Flusses an der Position des Hallsensors 32 auswirkt und das Einwirken von Streufeldern, die durch Statorströme verursacht werden, auf das zu detektierende Magnetfeld reduziert.

Selbstverständlich ist der Schutzumfang der Anmeldung nicht auf das beschriebene Ausführungsbeispiel beschränkt. Auch sind konstruktive Änderungen an der Förderpumpe selbstverständlich durchführbar, ohne den Schutzbereich des Hauptanspruchs zu verlassen.

## Patentansprüche

1. Elektromotorische Kfz-Flüssigkeits-Förderpumpe (10) mit einem elektrisch kommutierten Motorstator (12) und einem permanent erregten Motorrotor (14), wobei ein Spalttopf (16) den Nassbereich (22) mit dem Motorrotor (14) und einem Pumpenrotor (20) von dem den Motorstator (12) aufweisenden Trockenbereich (24) trennt, mit einem ferromagnetischen Flussleitelement (30) und mit einem Hallsensor (32), der statorseitig beabstandet zum Motorrotor (14) angeordnet ist,
**dadurch gekennzeichnet,**
**dass** das ferromagnetische Flussleitelement (30) in einer Ausnehmung (34) des Spalttopfes (16) angeordnet ist.

2. Elektromotorische Kfz-Flüssigkeits-Förderpumpe (10) nach Anspruch 1, **dadurch gekennzeichnet, dass** der Hallsensor (32) axial zum Motorrotor (14) angeordnet ist.

3. Elektromotorische Kfz-Flüssigkeits-Förderpumpe (10) nach Anspruch 1 oder 2, **dadurch gekennzeichnet, dass** der Hallsensor (32) ein SMD-BauteiJ ist, das in einer Querebene liegend vorgesehen ist.

4. Elektromotorische Kfz-Flüssigkeits-Förderpumpe (10) nach einem der vorangegangenen Ansprüche, **dadurch gekennzeichnet, dass** auf einer einzigen Platine (36) eine Steuereinheit (50) und der Hallsensor (32) vorgesehen sind.

5. Elektromotorische Kfz-Flüssigkeits-Förderpumpe (10) nach einem der vorangegangenen Ansprüche, **dadurch gekennzeichnet, dass** die Platine (36) einseitig bestückt ist.

6. Elektromotorische Kfz-Flüssigkeits-Förderpumpe (10) nach einem der vorangegangenen Ansprüche, **dadurch gekennzeichnet, dass** die Platine (36) nur auf ihrer motorabgewandten Seite bestückt ist

7. Elektromotorische Kfz-Flüssigkeits-Förderpumpe (10) nach Anspruch 6, **dadurch gekennzeichnet, dass** die Platine (36) im Bereich des Hallsensors (32) eine Öffnung (38) aufweist.

8. Elektromotorische Kfz-Fiüssigkeits-Förderpumpe (10) nach einem der vorangegangenen Ansprüche, **dadurch gekennzeichnet, dass** sich das Flussleitelement (30) distal verjüngt.

9. Elektromotorische Kfz-Flüssigkeits-Förderpumpe (10) nach einem der vorangegangenen Ansprüche, **dadurch gekennzeichnet, dass** sich das Flussleitelement (30) distal konisch verjüngt.

10. Elektromotorische Kfz-Ffüssigkeits-Förderpumpe (10) nach einem der vorangegangenen Ansprüche, **dadurch gekennzeichnet, dass** das Flussleitelement (30) mindestens teilweise und unverlierbar im Spalttopf (16) eingespritzt ist,

11. Elektromotorische Kfz-Flüssigkeits-Förderpumpe (10) nach einem der vorangegangenen Ansprüche, **dadurch gekennzeichnet, dass** kein Rückfluss-Leitelement vorgesehen ist.

12. Elektromotorische Kfz-Flüssigkeits-Förderpumpe (10) nach einem der vorangegangenen Ansprüche, **dadurch gekennzeichnet, dass** die Förderpumpe (10) eine Kühlmittelpumpe ist.
